(19) Europäisches Patentamt
European Patent Office
Office européen des brevets

(11) Publication number: 0 080 171
B1

(12) # EUROPEAN PATENT SPECIFICATION

(45) Date of publication of patent specification: 08.06.88

(51) Int. Cl.$^4$: C 08 J 9/34, C 08 G 18/32, C 08 G 18/50, C 08 G 18/76 // B60M1/32

(21) Application number: 82110657.2

(22) Date of filing: 18.11.82

(54) **Heat-insulating moulding and process for preparing the same.**

(30) Priority: 20.11.81 JP 185366/81
20.11.81 JP 185373/81

(43) Date of publication of application:
01.06.83 Bulletin 83/22

(45) Publication of the grant of the patent:
08.06.88 Bulletin 88/23

(84) Designated Contracting States:
DE GB

(56) References cited:
DE-B-2 513 817
US-A-3 523 918

The file contains technical information submitted after the application was filed and not included in this specification

(73) Proprietor: Hitachi, Ltd.
5-1, Marunouchi 1-chome
Chiyoda-ku Tokyo 100 (JP)

(72) Inventor: Gotoh, Masao
14-3, Uragaoka-2-chome
Yokosuka-shi (JP)
Inventor: Hira, Yasuo
Corpo-Okiyama B201 1-4, Muraokahigashi-1-chome
Fujisawa-shi (JP)
Inventor: Waragai, Kenichi
2606, Chogo
Fujisawa-shi (JP)
Inventor: Nakamura, Shozo
1790, Totsukacho Totsuka-ku
Yokohama (JP)
Inventor: Yokono, Hitoshi
8-5, Chuocho
Katsuta-shi (JP)

(74) Representative: Patentanwälte Beetz sen. - Beetz jun. Timpe - Siegfried - Schmitt-Fumian
Steinsdorfstrasse 10
D-8000 München 22 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 080 171 B1

Courier Press, Leamington Spa, England.

**Description**

This invention relates to reaction injection molded articles for automobile components which can be used for heat-insulating cases of light weight and with good heat-insulating characteristics. The molded articles comprise an integrated structure of high density skin layer and a lower density core.

Plastic structure consisting of an injection-molded base of, for example, ABS (acrylonitrile-butadienestyrene) resin or polypropylene resin, and a single or laminated heat-insulating foam layer of, for example, polyethylene foam, polystyrene foam or polymethylene foam, as bonded to the base, have been so far used for cases for automobile air conditioners. A vacuum-molded base of a polypropylene resin sheet is also used in place of the injection-molded base of ABS resin.

However, manufacturing of these structures is complicated concerning the molding of the base and foam as well as the bonding work; furthermore, a good heat-insulating efficiency cannot always be obtained in spite of the increased number of required parts. Car-loaded refrigerators which also can be transported independently have not yet been commercially available, but the cases for such refrigerator could be prepared basically according to the conventional art, for example by individually molding an inner case structure and an outer case structure of ordinary plastic and injecting polyurethane into the case structure to obtain a heat-insulating case, but such a system would be rather disadvantageous because of the required molding facilities, the required materials and the increased number of process steps and required parts, as in the case of the above-mentioned car air conditioners.

It was already known from DE—A—2 513 817 to manufacture automobile components composed of a cellular core of relatively low density and a compact outer zone of relatively high density on polyurethane basis by reacting polyisocyanates and amine-based polyols by using the reaction injection molding technique. It is an object of the present invention to improve the reaction injection molding process for producing heat insulating polyurethane articles comprising a skin layer of high density and a foamed low density core as known from the DE—A—2 513 817 by appropriate selection of the starting materials of the polyurethane system and the thermal process conditions and to provide heat-insulating polyurethane articles of the above type having both high thermal insulation properties and high impact resistance.

This object is achieved according to the characterizing clause of claim 1. The dependent claims refer to preferred embodiments.

According to the invention, the reaction injection molded articles for automobile components comprise skin layers of high density and an integrally molded cellular core of low density sandwiched therebetween on the basis of a polyurethane, and optionally usual additives, and are characterized in that the molded articles

are suitable for use as cases of car-loaded refrigerators and automobile air conditioners having both high thermal insulation properties and high impact resistance and

comprise

a skin layer of a density of 0.8 to 1.2 g/ml,

a cellular core of a density of 0.05 to less than 0.7 g/ml and

an overall density of 0.1 to 0.7 g/ml and

are made from a polyurethane system essentially consisting of

100 parts by weight of a liquid polyol components (A) comprising

at least 20% by weight of an aliphatic amine-based polyol (a) representing an adduct of an alkylene oxide to an aliphatic amine and having 3 to 4 OH groups in the molecule and an OH value of 450 to 800 (mg KOH/g),

30 to 60% by weight of an aromatic amine-based polyol (b) representing an adduct of propylene oxide to 4,4′-diaminodiphenylmethane and having an OH value of 280 to 600 (mg KOH/g), and

15 to 40% by weight of an ordinary polyol (c) representing an adduct of an alkylene oxide to compounds having 2 or 3 active hydrogen atoms in the molecule and having 2 or 3 OH groups in the molecule and an OH value of 30 to 100 (mg KOH/g), the total amount of components (a) + (b) + (c) being 100%, and

110 to 190 parts by weight of 4,4′-diphenylmethane diisocyanate and/or carbodiimidized 4,4′-diphenylmethane or 4,4′-diphenylmethane diisocyanate derivatives of the formula

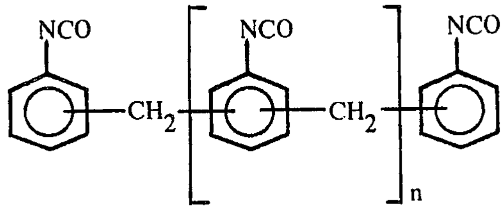

n being 0,3—0,8,
as polyisocyanate component (B).

The raw material for manufacturing heat-insulating molded articles according to the present invention is a liquid polyurethane system of high chemical reactivity, which essentially consists of a polyol component (A) comprising a foaming agent and optionally usual additives and a polyisocyanate component (B). Molding is carried out with a molding apparatus comprising a reaction injection molding (RIM) machine and a mold clamping mechanism. The molding process comprises mixing thr above-mentioned components in the mixing head section of the reaction injection molding machine under mutual impingement of the two components under a high pressure, for example, of 100 to 200 bar, and then injecting the mixture into a mold under a low pressure, for example, 2 to 10 bar, and molding articles of desired shape through heat generation, foaming and hardening by chemical reaction of the two components.

The RIM process is based on the fact that a low boiling solvent as a foaming agent can produce foam cells in a molding owing to vaporization caused by the heat of the exothermic chemical reaction in the mold. By controlling th amount of injected components the density of the molded articles can be freely adjusted in a wide range. The resulting molding is characterized by a sandwich structure having a high density skin layer and a low desnsity core layer. The lower the density of the entire molding the better are the heat-insulating characteristics of a molding. However, the strength of the molding structure is reduced with decreasing density, and on the other side, cases for automobile air conditioners and car-loaded refrigerators have to meet the requirements for mechanical strength and good heat insulation at the same time.

The skin layer of foamed molded articles prepared according to the RIM process determined the strength as well as the hardness are increased with increasing densitry. On the other hand, the cellular core determines the heat insulation, and the heat insulation efficiency is generally improved with decreasing density.

On the basis of these physical phenomena, the present inventors have made extensive studies in view of appropriate values of RIM structures satisfying the requirements for cases for automobile air conditioners and car-loaded refrigerators, for example, heat insulation $\lambda$ (0.02 to 0.08 W/K·m), strength (5 to 30 MPa), hardness (Shore D 60 to 75), weight and economics (production costs) and have obtained the following results.

The overall density of a molding must be in the range of 0.1 to 0.7 g/ml (100 to 700 kg/m$^3$). The overall density of 0.1 g/ml can give heat insulation on the same level as that for refrigerator case, and the overall density of 0.7 g/ml can give heat insulation on the same level as that for ABS moldings with a heat-insulating foamed layer. Practical overall density for cases for aotomobile air conditioners is 0.3 to 0.7 g/ml, and that for cases for car-loaded refrigerators is 0.1 g/ml to 0.5 g/ml.

The heat-insulating molded articles according to the present invention have an integrated structure comprising parts with locally different densities, where the skin layer subject to vibrating and impact loads is made from rigid molding having a high density of 0.8 to 1.2 g/ml and a low foaming ratio to obtain the necessary strength, and the cellular core has a low density of 0.05 to 0.7 g/ml and a high foaming ratio to obtain sufficient heat insulation. Particularly, the skin layer as part controlling the strength has a high density obtained by increasing the local heat dissipation in the mold. A suitable local heat dissipation of a mold can be attained, for example, by providing circulation holes for a coolant such as oil or water in the mold, or by using an inert core of a high heat dissipation material in the mold, or further providing holes for a coolant or cooling cylinders in the insert core, and by rapidly circulating the coolant through the holes or inserting the cooled cylinders into the holes, thereby increasing the heat dissipation of the insert core. By modifying the mold as described above, the desired molding can be obtained by one injection according to the RIM process.

In manufacturing sandwich structures having a skin layer and a cellular core, both the mold and the RIM process have been specifically improved to obtain a high density of the skin layer controlling the strength, that is, the mounting support parts for cases for automobile air conditioners and the bottom part of the inner case structure for cases for car-loaded refrigerator, the bottom part being subjected to impact load of the articles passing therein owing to car vibration. In the case of using an insertion core, a higher heat dissipation material is used in the insert core, as compared with the material in other parts in the mold than the insert core, and furthermore holes for circulating a coolant or for inserting cooled cylinders are provided in the insert core, and the coolant is circulated through the holes rapidly, or throughly cooled cylinders, as cooled by introducing a coolant such as dry ice into the cylinders in advance, are inserted into the holes to quench the mold, and it has been found that the density of the skin layers can be increased in a short time.

According to the above-mentioned finding, the skin parts controlling the strength can be selectively formed as high density structures.

From the practical viewpoint the overall density of a heat-insulating structure of a molding is in the range of 0.3 to 0.7 g/ml for cases of automobile air conditioners, and in the range of 0.1 to 0.5 g/ml for cases for car-loaded refrigerators, as already decribed before. On the other hand, the requirement for moldings with a lighter weight can be met with moldings having a lower overall density, which have better heat insulation but lower strength than moldings having a higher overall density. Thus, it is preferable to use metallic inserts for fitting with mountings or for nuts or parts to be fixed with screws, etc. to obtain sufficient strength and to improve the safety factor. A rigid skin layer is formed on the metal surface of the

metallic inserts according to the RIM process, and the moldings can be strongly secured thereby. The metallic inserts increase the weight to the moldings only by a few percents, which is not of substantial relevance.

In the actually employed RIM Process it is sufficient for heat-insulating structures for stationary room air conditioners or refrigerators only to take the requirements for heat insulation and strength into account at the same time in view of the overall density. On the other hand, heat-insulating cases for automobile air conditioners or car-loaded refrigerators are subject to vibrations during driving or transporting, and accordingly, the requirements for structural strength are on a much higher level. The molded articles according to the invention meet these requirements.

In this connection, it has been experimentally found that a heat-insulating molding prepared according to the RIM process has better heat-insulation at an overall density of less than 0.1 g/ml and also has a lighter weight and better economy, but has particularly lower strength, and thus is not suited for practical use in the respective sandwich structures, and that at an overall density of more than 0.7 g/ml, on the other hand, no sufficent heat insulation is obtained, so that the requirements for cases for automobile air conditioners or car-loaded refrigerators are not satisfied.

As to the ratio of the skin layer density ($\rho_s$) to the core layer density ($\rho_c$), it has been further found that at $\rho_s/\rho_c < 2$ ($\rho_c$ usually being in the range of 0.03 to 0.07 g/ml), the surface hardness is low, so that the molding is not suited for practical use with external impact load, whereas at a density ratio of $\rho_s/\rho_c > 30$, the core density is so low that the molding is liable to undergo bending, crushing or deformation due to an external load which is undesirable.

The raw materials for use in the present invention will now be described in detail below:

(A) Polyol component

The polyol component (A) is a mixture of the following three polyol components (a) to (c):

(a) Aliphatic amine-based polyols:

Aliphatic amine-based polyols are compounds having 3 to 4 OH groups in the molecule and an OH value of 450 to 800 mg KOH/g, obtained by addition reaction of an aliphatic amine with an appropriate amount of an alkylene oxide in the presence of a basic catalyst. Examples of these aliphatic amines are monoethanolamine, triethanolamine, ethylenediamine, triethylenetetramine, hexamethylenediamine and diethylenetriamine. Also ammonia can be used as said amine. Examples of alkylene oxides are ethylene oxide, propylene oxide, butylene oxide and epichlorohydrin. The aliphatic amine-based polyols can be used alone or in mixtures of at least two thereof, and have a good compatibility with foaming agents such as freon.

(b) Aromatic amine-based polyols:

Aromatic amine-based polyols are addition compounds of 4-4'-diaminodiphenylmethane

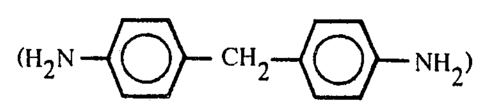

with propylene oxide, which have an OH value of 280 to 600 mg KOH/g. They improve the mechanical strength of a molding.

(c) Ordinary polyols:

The ordinary polyols are polyols having 2 or 3 OH groups in the molecule and an OH value of 30 to 100 mg KOH/g, obtained by adding an alkylene oxide to compounds having 2 or 3 active hydrogens in a molecule, such as glycerol, trimethylolpropane, triethanolamine, monoethanolamine, ethyleneglycol, water, propyleneglycol, bisphenol A, bisphenol F, etc. and further include the polyols described in J. H. Saunders, K. G. Frish, "Polyurethanes, Chemistry and Technology, Part I, Chemistry, and Part II, Technology", Robert E. Kreiger Publishing Company, Huntington, New York (1978); David Staly, "Amalytical Chemistry of the Polyurethanes, Part III", Robert E. Kreiger Publishing Company, Huntington, New York (1979); Keiji Itwata, "Plastic Zairyo Koza (2) Polyurethane resins", Nikkan Kogyo Shinbun-sha (1975). The ordinary polyols are effective for giving elongation to a molding. Both polyols (b) and polyols (c) together give strength and impact resistance to a molding.

When each of the polyols (a) to (c) is outside the said corresponding range, the resulting molding fails to meet the requirements for cases for automobile air conditioners or car-loaded refrigerators. That is, at less than 20% by weight of polyols (a), the polyol mixture has a poor compatibility with foaming agents such as freon, and liquid separation takes place. Thus, problems arise with the molding of cases. At more than 60% by weight of polyols (a), the moldings have insufficient strength. At less than 30% by weight of polyols (b), the moldings have poor strength. At more than 60% by weight of polyols (b), the mixture has poor compatibility with foaming agents such as freon, and problems arise with the molding of cases. At less than 15% by weight of polyols (c), the elongation of the moldings is too low, and the moldings become

brittle because of the low strength. At more than 40% by weight of polyols (c), the elastic modules is decreased and toughness is lost, resulting in insufficient strength.

(B) Polyisocyanate component:

Polyisocyanates for use in the present invention include 4,4'-diphenylmethane diisocyanate (crude MDI) and carbodiimidized MDI, which can be used alone or in mixtures thereof.

The mixing ratio of the polyisocyanate component (B) to the polyol component (A) is (0,95 to 1,30):1 in terms of the isocyanate index, i.e. the ratio of the number of NCO groups contained in the isocyanate component to the number of OH groups contained in the polyol component. The above defined mixing ratio of 110 to 190 parts by weight of component B to 100 parts by weight of component A leads to good heat resistance.

Foam controlling agent:

The foam-controlling agent for use in the present invention includes alkylene oxide-modified polydimethylsiloxanes and fluorine-based surfactants, which can be used alone or in mixtures thereof. The mixing ratio is 1 to 5 parts by weight of the foam-controlling agent to 100 parts by weight of the polyol component A.

Foaming agent:

The foaming agent for use in the present invention includes water and organic liquid compounds of low boiling point such as trichloromonofluoromethane, dichlorodifluoromethane, methylene chloride, trichlorotrifluoroethane, and tetrachlorodifluoroethane, which can be used alone or in mixtures thereof. The mixing ratio is 5 to 45 parts by weight per 100 parts by weight of the polyol component A.

Catalyst:

The catalysts for use in the present invention include diazobicycloalkenes such as 1,4-diazabicyclo-[2.2.2]-octane, 1,8-diazabicyclo [5.4.0]-7-undecene (DBU), 1,5-diazabicyclo-[4.2.0]-5-octene, 1,8-diazabicyclo-[7.2.0]-8-undecene, 1,4-diazabicyclo-[3.3.0]-4-octene, 3-methyl-1,4-diazabicyclo-(3.3.0]-4-octene, 3,6,7,7-tetramethyl-1,4-diazabicyclo-[3.3.0]-4-octene, 7,8,8-trimethyl-1,5-diazabicyclo-[4.3.0]-5-nonene, 1,8-diazabicyclo-[7.3.0]-8-dodecene, 1,7-diazabicyclo-[4.3.0]-6-nonene, 1,5-diazabicyclo-[4.4.0]-5-decene, 1,8-diazabicyclo-[7.4.0]-8-tridecene, 1,8-diazabicyclo-(5.3.0]-7-decene, 9-methyl-1,8-diazabicyclo-[5.3.0]-7-decene, 1,6-diazabicyclo[5.5.0]-6-tridecene, 1,7-diazabicyclo-[6.5.0]-7-tridecene, 1,8-diazabicyclo-[7.5.0]-8-tetradecene, 1,10-diazabicyclo-[7.3.0]-9-dodecene, 1,10-diazabicyclo-[7.4.0.]-9-tridecene, 1-14-diazabicyclo-[11.3.0]-13-hexadecene, 1,14-diazabicyclo-[11.4.0]-13-heptadecene, triethylenediamine, dimethylethanolamine, morpholines and piperidines. These amines are used in the form of salts obtained by adding thereto a weak acid such as formic acid, oxalic acid, propionic acid, phosphoric acid, 2-ethylhexanoic acid or the like, a strong acid such as nitric acid, hydrochlorid acid, or the like. or a compound having a phenolic hydroxyl groups such as phenol, cresol, or the like. Acids which can be used in combination with these amines having a hetero ring in the molecule include Lewis acids and Brønsted acids. By masking the lone electron pair of these amines with an acid (i.e., in the form of a salt of a tertiary amine), the catalytic activity can be enhanced with an increase of temperature and the curing properties of the material can be enhanced without lowering flowability of the material.

The catalyst is used alone or in the form of mixtures. The mixing ratio is 0.2 to 10 parts by weight of the catalyst to 100 parts by weight of the polyol component A.

Other materials for use in the present invention include fillers such as organic and inorganic fibers, powders and granules, pigments, dyes, flame retardants and antioxidants, which can be used as mixed in the polyol or in the polyisocyanate component.

For manufacturing the molded articles according to the invention commercially available RIM machines can be used. In the following the invention is further explained with reference to the drawings and examples.

Fig. 1 is a schematic view showing a case for an automobile air conditioner.

Fig. 2 is a cross-sectional view alomng the line II—II of Fig. 1.

Fig. 3 is a schematic view showing the principle of the RIM process.

Fig. 4 to 6 are views showing a steel mold for molding a case for an automobile air conditioner according to the RIM process, where Fig. 4 is a plan view. Fig. 5 is a cross-sectional vertical view along the line V—V of Fig. 4, and Fig. 6 is a vertical side view.

Fig. 7 is a schematic cross-sectional view showing a mold for use in the present invention.

Fig. 8(a) and (b) show the outline of an insert core.

Fig. 9 is a cross-sectional view of a cartridge.

Fig. 10 is a view showing supporting of cartridges by a cartridge holder.

Fig. 11 is a schematic view showing the construction of a car-loaded refrigerator.

Fig. 12 is an overall view showing a passage for circulating a coolant in a car-loaded refrigerator.

Fig. 13 is a cross-sectional view showing the overall structure of a refrigerator case molded according to the present invention.

In Table 1, typical examples of component compositions for use in the present invention are given; Table 2 shows particulars and conditions for the RIM process.

Molding is carried out in the following manner:

Liquids A and B of any compositions No. 1 to 3 shown in Table 1 are placed into separate tanks of [a]RIM machine, and sealed into the tanks under nitrogen gas of a gauge pressure of about 2 bar, and circulated through a mixing head while stirring the liquids. The liquids A and B are mixed together under impingement against each other and under a high pressure such as 150 to 200 bar through an orifice at the molding and injected into a mold.

That is, in the RIM process, as shown in Fig. 3, the liquid A circulating by pumping through a pump 31 from a tank 30 for liquid A and the liquid B circulating by pumping through a pump 33 from a tank 32 through a mixing head 34 are mixed under impingement against each other at molding, and injected into the cavity 37 of a mold comprised of an upper mold part 35 and a lower mold part 36.

A detachable insert core capable of being cooled by a coolant such as dry ice is provided at the cavity part to obtain a molding with the desired high density portions. That is, only the molding portions on the insert core in the cavity are made to have a particularly high density by the rapid cooling effect of the insert core.

Fig. 1 shows an integrated structure of an air conditioner case with projecting fixing parts 1a, 2a as high density portions of the upper case part 1 and the lower case part 2 molded according to the RIM process. When the case of the air conditioner shown in Fig. 1 is used as unit case for automobile air conditioners, the upper case part 1 and the lower case part 2 are fixed to the car body by means of the projecting fixing parts 1a and 2a, respectively, and thus the case must have a case body with a low density and high heat insulation and projecting fixing parts with high density and high strength. Particularly the root parts around the projecting fixing parts must have a high density and high strength by the cooling effect.

In Fig. 7, a RIM mold structure for use in the present invention is shown, where the mold cavity consists of a cavity 37 for molding the lower case part 2 and cavities 37a and 37a for molding the fixing parts 2a and 2a. The cavity 37 is formed between the upper mold 35 fixed to an upper mold-fixing plate 40 and the lower mold 36 provided on a lower mold-fixing plate 43 through a lower mold-mounting plate 41 and spacer blocks 42. On the other hand, the cavities 37a for molding the fixing parts are provided in insert cores 38 with cooling means. The insert cores 38 provided with holes 39 for encasing cartridges which are arranged around the cavities 37a, as shown in Fig. 7. The mold is provided with pushing pins 45 interlocked with an oil-hydraulic pushing rod 44, which are used to disengage the molding formed in the cavities together with the insert cores 38 from the lower mold 36.

As shown in Figs. 8 to 10, the cooling means for the insert cores 38 are tubular metal cartridges 46 of thin wall thickness having one sealed end, and containing a coolant 48, the cartridges being detachably inserted into the holes 39 for encasing the cartridges. The cartridges must have a high thermal conductivity and a high rust resistance when their application conditions are taken into account, and it has been found that aluminium cartridges having a wall thickness of about 0.5 mm or stainless steel cartridges having a wall thickness of about 0.1 mm are preferable. The coolant 48 can be liquid nitrogen or liquid air, but preferably is flaky dry ice solidified from liquid carbon dioxide at about −75°C owing to its convenient handling. In order to rapidly insert or take out several cartridges 46 into or from the holes 39 for encasing the cartridges in the insert cores 38 at the same time, it is preferable to detachably hold the cartridges 46 by a cartridge holder 49 as shown in Fig. 10. The cartridge holder 49 may be a steel frame. In order to seal the coolant 48 into cartridges 46, the cartridges are stoppered with caps 47 of aluminium or the like.

With the foregoing structure, the molding is carried out as follows.

In Fig. 7, the upper mold 35 and the lower mold 36 are heated and kept at the predetermined temperature, and then made apart from each other to place the insert cores 38 into the lower mold 36. The cavity 37 and the cavities 37a for molding the fixing parts in the insert cores 38 together form a mold cavity. Cartridges 46 (Fig. 9) filled with coolant 48 in advance are inserted into the holes 39 for encasing the cartridges in the insert cores 38. Then the liquids A and B for RIM are mixed and injected into the mold cavity and subjected to foaming and hardening. After the predetermined hardening time, the upper mold and the lower mold are separated from each other, and the molding thus formed and the insert cores 38 are pushed out together by the pushing pins 45. Then, the molding is taken out of the insert cores 38. Subsequently, the cartridges are taken out of the insert cores 38, and fresh cartridges containing the coolant 48, as separately prepared, are newly inserted into the holes in the insert cores, and then the insert cores 38 are inserted into the cavities 37a for molding the fixing parts. Preferably, a mold-releasing agent is then applied to the mold, and the upper mold and the lower mold are clamped together and subjected to the next run.

Molds used in the following examples are two model molds characterized in Table 2, and actual model molds for molding cases for automobile air conditioners and car-loaded refrigerators. These molds are provided with embedded coils for circulating a heating medium to control the mold temperature to a specific value.

For cases for automobile air conditioners insert cores having holes for encasing cooled cartridges are used for molding fixing parts.

Table 1

| Component A | | Component B | 1 | 2 | 3 |
|---|---|---|---|---|---|
| Liquid A | Aliphatic amino-based polyol (a) | PO* adduct of monoethanol-amine (OH value 650 mg/g KOH | 40 | 40 | 35 |
| | Aromatic amine-based polyol (b) | PO* adduct of 4,4'-diamino-diphenylmethane (OH value 430 mg/g KOH | 40 | 40 | 40 |
| | Ordinary polyol (c) | PO*, EO**-adduct of glycerol (OH value 60 mg/g KOH, molar ratio of PO:EO=2:1) | 20 | 20 | 25 |
| | Foam-controlling agent | Alkylene oxide-modified polydimethylsiloxane | 1.0 | 1.0 | 2.0 |
| | Foaming agent | $H_2O$ | - | - | 0.5 |
| | | Trichloromonofluoromethane | 25 | 25 | 10 |
| | Catalyst | DBU*** phenolate | 3.0 | 1.5 | 0.4 |
| | | Triethylenediamine | - | 0.5 | 1.3 |
| Liquid B | Polyisocyanate | Crude MDI**** (NCO content 30,5 % b.w.) | 118 | - | 149 |
| | | Carbodiimidized MDI (Carbodimidization ratio 30 % b.w., NCO content 30 % b.w.) | - | 122 | - |

- Cont'd -

Table 1 (Cont'd)

| | |
|---|---|
| * | Propylene oxide |
| ** | Ethylene oxide |
| *** | 1,8-diazabicyclo [5.4.0]-7-undecene |
| **** | 4,4'-diphenylmethane diisocyanate |

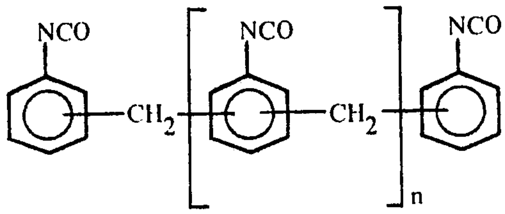

n: 0.3 to 0.8; (average 0.6).

Table 2

| | Item | | |
|---|---|---|---|
| Apparatus | Mold | | Steel or resin mold, cavity dimensions: 500 x 800 x 10 mm |
| | RIM machine | | SH type, made by Battenfeld, DE |
| Molding conditions | Mold temperature | | 40 - 80°C |
| | Liq. temp. | Liq. A | 25 - 30°C |
| | | Liq. B | 20 - 25°C |
| | Impinging and mixing pressure | | 150 - 200 $kg/cm^2$ |
| | Injection rate | | 300 - 460 g/s |

Example 1

Characteristics of model moldings prepared from the raw materials No. 1 and No. 2 shown in Table 1 in the flat plate model given in Table 2 according to the RIM process as described above are shown in Table 3.

In this Example, the overall density of moldings is changed from 0,1 to 0,8 g/ml by controlling the injection amount. The strength and heat isulation (thermal conductivity) depend on the combination of skin layer density $p_S$ and the core density $p_C$ even though the overall density of the molding is made constant. The ratio $p_S/p_C$ can be controlled by changing mold material and mold temperature and consequently by changing the packing ratio in foaming and hardening depending upon the mold material and mold temperature because of utilization of differences in heat dissipation.

For 8 model moldings, the properties of moldings and bending strength (ASTM D790) and thermal conductivity as physical properties are shown in Table 3.

Table 3

| Item \ Test Piece No. | 1 | 2 | 3 | 4 | 5 | 6 | 7 | 8 |
|---|---|---|---|---|---|---|---|---|
| Raw Material No. (Table 1) | 1 | 1 | 1 | 1 | 2 | 2 | 2 | 2 |
| Mold material | steel | steel | resin | resin | steel | steel | resin | resin |
| Overall density of molding (g/ml) | 0,3 | 0.6 | 0,3 | 0.6 | 0,15 | 0.75 | 0.15 | 0.75 |
| Skin density of molding (g/ml) | 1,2 | 1.15 | 0.9 | 0.8 | 0,9 | 0.9 | 0.7 | 1.0 |
| Core density of molding (g/ml) | 0,045 | 0.05 | 0.06 | 0.09 | 0,03 | 0,06 | 0,09 | 0,08 |
| ps/pc | 27 | 23 | 15 | 9 | 30 | 15 | 8 | 13 |
| Bending strength of molding (kg/cm2) | 350 | 650 | 290 | 520 | 160 | 890 | 130 | 730 |
| Thermal conductivity of molding ($10^3$ W/K·m) | 34 | 72 | 35 | 77 | 20 | 90 | 25 | 93 |
| Vibration resistance (vibrations: 33 Hz; 2,2g, 3 h) | OK | OK | OK | OK | OK | OK | OK | OK |

Examples 2 and 3 and Comparative Examples 1 and 2

RIM moldings are prepared from raw material No. 1 of Table 1 in a mold for cases for automobile air conditioners, as made from injection molding resin (a mixture of polyurethane and metal powder), according to the insert core cooling process. The appearance of the case molding is shown in Fig. 1, where the case comprises an upper case 1 and a lower case 2.

In Fig. 2, a cross-sectional view along the line II—II of Fig. 1 is shown; the structure comprises a rigid skin layer 3 and a foamed cellular core 4.

Many moldings with different densities are prepared, among which those with typical densities are selected and subjected to tests, and the results are shown as Examples 2 and 3 and Comparative Examples 1 and 2 in Table 4.

When the overall density is as low as 0,1 g/ml, good heat insulation can be obtained, but there are problems in vibration and drop strength. When the over-all density is as high as 0,9 g/ml, the strength is satisfactory, but no good heat insulation is obtained and the dewing test is not satisfactory. From the practical viewpoint, desirable overall densities are in the range of 0,3 to 0,7 g/ml.

Table 4

| Example No. | 2 | 3 | Comp.1 | Comp.2 | 4 | 5 |
|---|---|---|---|---|---|---|
| Raw material No. (Table 1) | 1 | 1 | 1 | 1 | 3 | 3 |
| Overall density (g/ml) | 0.3 | 0.6 | 0.1 | 0.9 | 0.35 | 0.5 |
| Density at heat insulating part (g/ml) | 0.23 | 0.52 | 0.1 | 0.9 | 0.27 | 0.41 |
| Density at fixing part (g/ml) | 0.8 | 0.95 | 0.1 | 0.9 | 0.8 | 0.93 |
| Dewing test* | OK | OK | OK | NO | OK | OK |
| Vibration test** | OK | OK | NO | OK | OK | OK |
| Drop strength*** | OK | OK | NO | OK | OK | OK |

* Dewing state is investigated by supplying cold air at 5°C into the test case in the surrounding atmosphere at 35°C and 70% relative humidity.

** An evaporator is encased in the test case and the test case is subjected to vibration in the actual mounting state at a vibration frequency of 66 Hz and a vibrational acceleration of 2.2 g for 3 h (JIS D 1601)

*** The test case is dropped onto a concrete floor in the most breakable direction of the test case to investigate the drop height when broken. The test case is OK if broken at a drop height of 50 cm or higher.

Examples 4 and 5

Cases for automobile air conditioners are prepared from the raw material No. 3 in Table 1 in steel molds shown in Figs. 4 to 6 according to the RIM process.

The molds shown in Figs. 4 to 6 comprise an upper mold-fixing plate 50, a steel upper mold 51, a steel lower mold 52, spacers 53, a lower mold-fixing plate 54 for fixing the lower mold 52 through spacers 53, an injector pin 55 of a mold clamping mechanism, guide pins 56, springs 57, injector pins 58, an injector plate 59, heating medium passages 60a (40 to 60°C), coolant passages 60b (0 to 5°C), a cavity 62 for the upper case part of the case in the lower mold 52, a cavity 63 for the lower case part of the case in the lower mold 52, an after-mixer 64, a runner 65, gates 61, a U-type metal insert 66 inserted in the cavity 63, a U-type metal insert 67 inserted in the cavity 63, a metal washer insert 68 inserted in the cavity 62, a screw nut metal insert 69 inserted in the cavity 62, and an injection inlet 70 for injecting the mixture of liquids A and B into the after-mixer 64.

With the foregoing structure, the insert members 66, 67, 68 and 69 are inserted while the upper mold 51 is taken apart together with the upper mold-fixing plate 50, and then the upper mold 50 is clamped together with the lower mold 52. Then, the entire mold is kept to a temperature of 40 to 80°C with a heating medium passing through the passages 60a while the cavities 1a and 2a for the fixing parts are kept to a temperature of 0 to 5°C by a coolant passing through the passages 60b provided around the cavity. A mixture of liquids A and B or raw material No. 3 in Table 1 at a temperature of 25 to 35°C, obtained by impingement mixing, is injected into the injection inlet to the mold kept in that state, mixed by the after-mixer 64 and injected into the cavities 62 and 63 through the runner 65 and gates 61 while controlling the injection rate so that the overall densities are 0,35 g/ml and 0,5 g/ml for Examples 4 and 5, respectively, as shown in Table 4, whereby the upper case part 1 and the lower case part 2 of the case can be molded at the same time.

At that time, in the upper case part 1 and the lower case part 2, the body parts (heat insulated part) are at a mold temperature of 40 to 60°C, and can have a thin skin layer and low densities of 0.27 g/ml and 0.41 g/ml for Examples 4 and 5, respectively, whereas the fixing parts are at a mold temperature of 5 to 25°C, and cah have high densities of 0,8 g/ml and 0,93 g/ml for Examples 4 and 5, respectively. Thus, practically applicable cases for automobile air conditioners can be produced, as shown in Table 4.

Examples 6 to 8 and Comparative Examples 4 and 5

In Fig. 11, the structure of a car-loaded refrigrator is schematically shown. It comprises a refrigerator box 5 for encasing the material to be cooled, a cooling unit 6 comprising a refrigeration cycle, a cooled gas passage, and a power source. The box is connected to the cooling unit through a punch key. The device further comprises a compressor 8, a condenser 9, an evaporator 10, a fan 11, a motor 12, a first heat insulating member 13, a cooled gas inlet 15, a cooled gas outlet 16, a power source cord 18, and a plug 23.

In Fig. 12 the overall structure of the cooled gas circulation passage is shown. The structure further comprises a refrigerator box cover 20, a refrigerator box body 21, a second heat-insulating member 14, and a pipe 101.

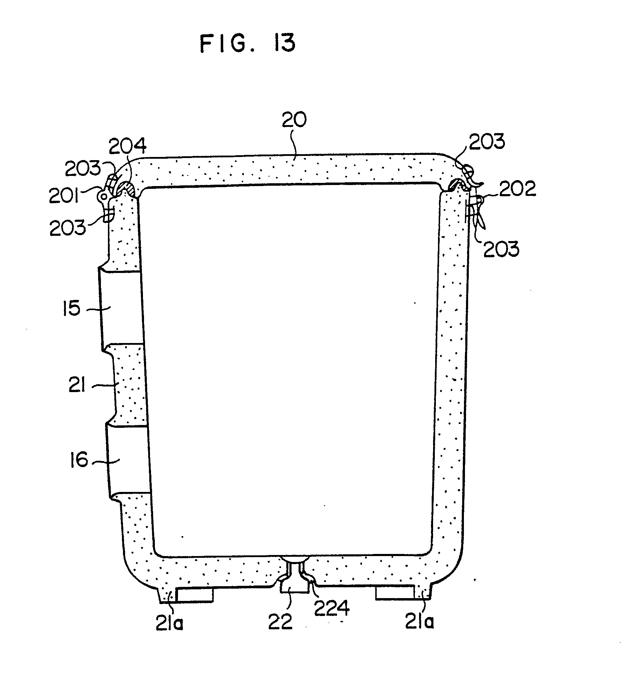

Fig. 13 shows the overall structure of the refrigerator box. The refrigerator box is molded according to the RIM process. The structure further comprises a cooled gas inlet 15, a cooled gas outlet 16, a refrigerator box body 21, a cover 20 molded according to the RIM process separately from the body, a drain plug 22, a hinge 201, a punch key 202, a back plate 203, a cover packing 204, and a drain packing 224.

In the structure of Fig. 13, impact resistance can be obtained by supporting parts 21a projecting at the bottom of the body 20 and having a high density.

A number of refrigerator boxes have been molded from raw material No. 2 in Table 1 in a steel mold according to the RIM process, whereby the density of moldings has been changed. Typical moldings have been selected and subjected to tests.

Results are shown in Table 5 as Examples 6 to 8 and Comparative Examples 4 and 5. The molding having the overall density of 0.08 g/ml has a good heat insulation efficiency and passes the in-box temperature drop test, but is low in strength, and partly damaged in the vibration test. The molding having the overall desnity of 0,7 g/ml has satisfactory strength and passes the vibration test, but is poor in heat insulation and thus cannot pass the in-box temperature drop test. Thus, the desirable practical level for the overall density is about 0,5 g/ml.

Table 5

| Example No. | 6 | 7 | 8 | Comp. Ex. 4 | Comp. Ex. 5 |
|---|---|---|---|---|---|
| Overall density (g/ml) | 0.1 | 0,2 | 0.45 | 0,08 | 0,7 |
| Wall density (g/ml) | 0,08 | 0,16 | 0,32 | 0,08 | 0,7 |
| Bottom density (g/ml) | 0,3 | 0.54 | 0.73 | 0,08 | 0,7 |
| In-box temperature drop test* | OK | OK | OK | OK | NO |
| Vibration test** | OK | OK | OK | NO | OK |

* Time required for lowering the in-box temperature to 0°C by operating the refrigerator at an ambient temperature of 40°C is measured. Not more than 60 min is OK.

** The refrigerator box is completely filled with aluminum beer cans having a net content of 500 ml, and subjected to vibrations at a vibration frequency of 66 Hz and a vibrational acceleration of 2.2 g for 3 h, and then the state of damage is investigated.

As described above, the present invention provides heat-insulating cases for automobile air conditioners and car-loaded refrigerators having an integrated structure of skin layers of high density at the surface and a core layer of independent foam cells therebetween, molded from a novel raw material composition according to the one shot RIM process, and thus cases with high insulation and high impact resistance as desired can be obtained with high productivity.

**Claims**

1. Reaction injection molded articles for automobile components comprising skin layers of high density and an integrally molded cellular core of low density sandwiched therebetween on the basis of a polyurethane, and optionally usual additives,

characterized in that the molded articles

are suitable for use as cases of car-loaded refrigerators and automobile air conditioners having both high thermal insulation properties and high impact resistance and

comprise

a skin layer of a density of 0.8 to 1.2 g/ml,

a cellular core of a density of 0.05 to less than 0.7 g/ml and

an overall density of 0.1 to 0.7 g/ml and

are made from a polyurethane system essentially consisting of

100 parts by weight of a liquid polyol component (A) comprising

at least 20% by weight of an aliphatic amine-based polyol (a) representing an adduct of an alkylene oxide to an aliphatic amine and having 3 to 4 OH groups in the molecule and an OH value of 450 to 800 (mg KOH/g),

30 to 60% by weight of an aromatic amine-based polyol (b) representing an adduct of propylene oxide to 4,4'-diaminodiphenylmethane and having an OH value of 280 to 600 (mg KOH/g), and

15 to 40% by weight of an ordinary polyol (c) representing an adduct of an alkylene oxide to compounds having 2 to 3 active hydrogen atoms in the molecule and having 2 or 3 OH groups in the molecule and an OH value of 30 to 100 (mg KOH/g), and the total amount of components (a) + (b) + (c) being 100%, and

110 to 190 parts by weight of 4,4'-diphenylmethane diisocyanate and/or carbodiimidized 4,4'-diphenylmethane or 4,4'-diphenylmethane diisocyanate derivatives of the formula

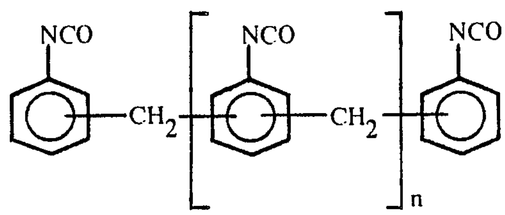

n being 0,3—0,8,

as polyisocyanate component (B).

2. Molded articles according to claim 1, characterized in that they comprise projecting fixing parts having a density of 0,8 to 1,2 g/ml.

3. Molded articles according to claim 1, characterized in that they comprise metallic fixation inserts provided below the skin layer.

4. A process for producing the molded articles according to one of claims 1 to 3 by reaction injection molding of a polyurethane system comprising as liquid polyol component and a liquid polyisocyanate component in a mold with temperature control during molding, characterized by use of

100 parts by weight of a liquid polyol component (A) comprising

at least 20% by weight of an aliphatic amine-based polyol (a) representing an adduct of an alkylene oxide to an aliphatic amine and having 3 to 4 OH groups in the molecule and an OH value of 450 to 800 (mg kOH/g),

30 to 60% by weight of an aromatic amine-based polyol (b) representing an adduct of propylene oxide to 4,4'-diaminodiphenylmethane and having an OH value of 280 to 600 (mg kOH/g), and

15 to 40% by weight of an ordinary polyol (c) the total amount of components (a) + (b) + (c) being 100%,

and

110 to 190 parts by weight of 4,4'-diphenylmethane diisocyanate and/or carbodiimidized 4,4'-diphenylmethane or 4,4'-diphenylmethane derivatives of the formula

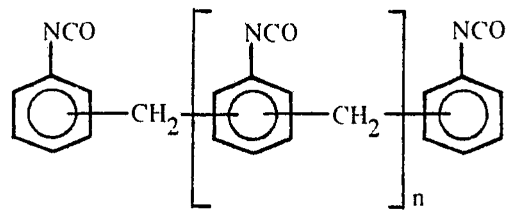

n being 0,3—0,8,
as polyisocyanate component (B).

**Patentansprüche**

1. Durch Reaktionsspritzguß geformte Körper für Kraftfahrzeugbestandteilte mit Oberflächenschichten hoher Dichte und dazwischen einem eingeformten Kern mit Zellenstruktur und niedriger Dichte auf der Basis eines Polyurethans und gegebenenfalls herkömmlicher Zusätze, dadurch gekennzeichnet, daß die Formkörper

zur Verwendung als Gehäuse für Kühlbehälter auf Lastwagen und Kraftfahrzeug-Klimaanlagen mit sowohl hohen thermischen Isolationseigenschaften als auch hoher Schlagfestigkeit geeignet sind,

eine Oberflächenschicht mit einer Dichte von 0,8 bis 1,2 g/ml,

einen Kern mit Zellenstruktur und einer Dichte von 0,05 bis unter 0,7 g/ml und

eine Gesamtdichte von 0,1 bis 0,7 g/ml aufweisen und

hergestellt werden aus einem Polyurethan-System von im wesentlichen

100 Gewichtsteilen einer flüssigen Polyolkomponente (A), ethaltend

mindestens 20 Gewichtsprozent eines aliphatischen Polyols (a) auf Aminbasis, das ein Addukt eines Alkylenoxids an ein aliphatisches Amin ist und 3 bis 4 Hydroxylgruppen in dem Molekül und eine Hydroxylzahl von 450 bis 800 (mg KOH/g) hat,

30 bis 60% eines aromatischen Polyols (b) auf Aminbasis, das ein Addukt von Propylenoxid an 4,4'-Diaminodiphenylmethan ist und eine Hydroxylzahl von 280 bis 600 (mg KOH/g) hat, und

15 bis 40 Gewichtsprozent eines gewöhnlichen Polyols (c), das ein Addukt eines Alkylenoxids an Verbindungen mit 2 oder 3 aktiven Wasserstoffatomen im Molekül ist und 2 bis 3 Hydroxylgruppen im Molekül und eine Hydroxylzahl von 30 bis 100 (mg KOH/g) hat, wobei die Gesamtmenge der Komponenten (a) + (b) + (c) 100% ausmacht, und

110 bis 190 Gewichtsteilen 4,4'-Diphenylmethan-diisocyanat und/oder carbodiimidiertem 4,4'-Diphenylmethan oder 4,4'-Diphenylmethan-diisocyanat-Derivaten der Formel

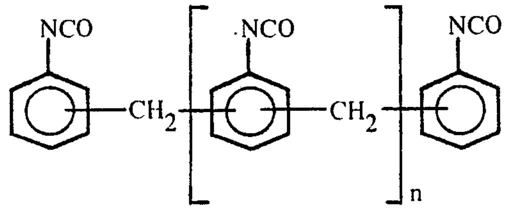

wobei n 0,3—0,8 ist,

als Polyisocyanatkomponente (B).

2. Formkörper nach Anspruch 1, dadurch gekennzeichnet, daß sie vorspringende Befestigungsteile mit einer Dichte von 0,8 bis 1,2 g/ml aufweisen.

3. Formkörper nach Anspruch 1, dadurch gekennzeichnet, daß sie Metallbefestigungsinserts unter der Oberflächenschicht aufweisen.

4. Verfahren zur Herstellung der Formkörper nach einem der Ansprüche 1 bis 3 durch Reaktionsspritzguß eines Polyurethan-Systems, enthaltend eine flüssige Polyolkomponente und eine flüssige Polyisocyanatkomponente in eine Form unter Temperaturregelung während des Spritzgusses, gekennzeichnet durch Verwendung von

100 Gewichtsteilen einer flüssigen Polyolkomponente (A), enthaltend

mindestens 20 Gewichtsprozent eines aliphatischen Polyols (a) auf Aminbasis, das ein Addukt eines Alkylenoxids an ein aliphatisches Amin ist und 3 bis 4 Hydroxylgruppen in dem Molekül und eine Hydroxylzahl von 450 bis 800 (mg KOH/g) hat,

30 bis 60% eines aromatischen Polyols (b) auf Aminbasis, das ein Addkt von Propylenoxid an 4,4'-Diaminodiphenylmethan ist und eine Hydroxylzahl von 280 bis 600 (mg KOH/g) hat, und

15 bis 40 Gewichtsprozent eines gewöhnlichen Polyols (c), das ein Addukt eines Alkylenoxids an Verbindungen mit 2 oder 3 aktiven Wasserstoffatomen im Molekül ist und 2 bis 3 Hydroxylgruppen im

Molekül und eine Hydroxylzahl von 30 bis 100 (mg KOH/g) hat, wobei die Gesamtmenge der Komponenten (a) + (b) + (c) 100% ausmacht, und

110 bis 190 Gewichtsteilen 4,4'-Diphenylmethan-diisocyanat und/oder carbodiimidiertem 4,4'-Diphenylmethan oder 4,4'-Diphenylmethan-diisocyanat-Derivaten der Formel

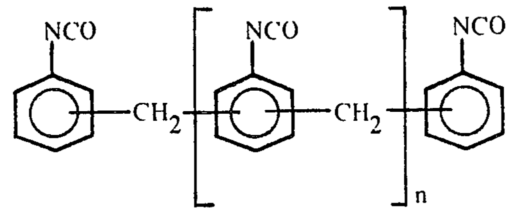

wobei n 0,3—0,8 ist,

als Polyisocyanatkomponente (B).

**Revendications**

1. Articles moulés par moulage réactif par injection pour pièces d'automobiles comprenent des couches superficielles de haute densité et entre celles-ci un noyau cellulaire moulé intégralement et de petite densité à base d'un polyuréthane et éventuellement d'additifs usuels, caractérisés en ce que les articles moulés

sont appropriés à l'utilisation en tant que caisses de réfrigérateur sur véhicules ou climatiseurs d'automobiles ayant en même temps de bonnes propriétés d'isolement thermique et une haute résistance au choc,

qu'ils comprennent

une couche superficielle avec une densité de 0,8 à 1,2 g/ml,

un noyau cellulaire avec une densité de 0,05 à moins de 0,7 g/ml,

qu'ils ont une densité totale de 0,1 à 0,7 g/ml et

qu'ils sont préparés à partir d'un système de polyuréthane consistant essentiellement de

100 parties en poids d'un composant polyol (A) liquide comprenant

au moins 20% en poids d'un polyol (a) aliphatique à base d'amine représentant un produit d'addition d'un oxyde d'alkylène à une amine aliphatique et ayant 3 à 4 groupements hydroxyles dans la molécule et un indice d'hydroxyle de 450 à 800 (mg KOH/g),

30 à 60% en poids d'un polyol (b) aromatique à base d'amine représentant un produit d'addition d'un oxyde de propylènè à 4,4'-diaminodiphényl-méthane et ayant un indice d'hydroxyle de 280 à 600 (mg KOH/g), et

15 à 40% en poids d'un polyol (c) usuel représentant un produit d'addition d'un oxyde d'alkylène à des composants avec deux ou trois atomes d'hydrogène actifs dans la molécule et ayant deux ou trois groupements hydroxyles dans la molécule et un indice d'hydroxyle de 30 à 100 (mg KOH/g), la quantité totale des composants (a) + (b) + (c) étant 100%, et

110 à 190 parties en poids de 4,4'-diphénylméthane-diisocyanate et/ou de 4,4-diphénylméthane carbodiimidifié ou de dérivés de 4,4'-diphénylmethane-diisocyanate de formule

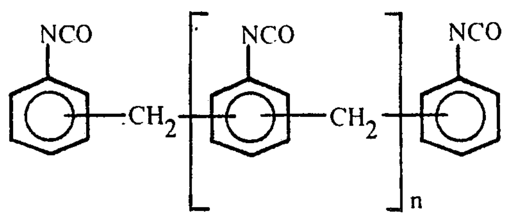

n étant 0,3—0,8

en tant que composant polyisocyanate (B).

2. Articles moulés selon la revendication 1, caractérisés en ce qu'ils comprennent des parties saillantes de fixation avec une densité de 0,8 à 1,2 g/ml.

3. Articles moulés selon la revendication 1, caractérisés en ce qu'ils comprennent des inserts métalliques de fixation sous la couche superficielle.

4. Procédé de prépararion des articles moulés selon une des revendications 1 à 3 par moulage réactif par injection d'un système de polyuréthane comprenant un composant polyol liquide et un composant polyisocyanate liquide dans un moule avec réglage de temperature pendant le moulage, caracterisée par l'utilisation de

100 parties en poids d'un composant polyol (A) liquide comprenant

au moins 20% en poids d'un polyol (a) aliphatique à base d'amine représentant un produit d'addition

d'un oxyde d'alkylène à une amine aliphatique et ayant 3 à 4 groupements hydroxyles dans la molécule et un indice d'hydroxyle de 450 à 800 (mg KOH/g),

30 à 60% en poids d'un polyol (b) aromatique à base d'amine représentant un produit d'addition d'un oxyde de propylène à 4,4'-diaminodiphényl-méthane et ayant indice d'hydroxyle de 280 à 600 (mg KOH/g), et

15 à 40% en poids d'un polyol (c) usuel représentant un produit d'addition d'un oxyde d'alkylène à des composants avec deux ou trois atomes d'hydrogène actifs dans la molécule et ayant deux ou trois groupements hydroxyles dans la molécule et un indice d'hydroxyle de 30 à 100 (mg KOH/g), la quantité totale des composants (a) + (b) + (c) étant 100%, et

110 à 190 parties en poids de 4,4'-diphénylméthane-diisocyanate et/ou de 4,4-diphénylméthane carbodiimidifié ou de dérivés de 4,4'-diphénylméthane-diisocyanate de formule

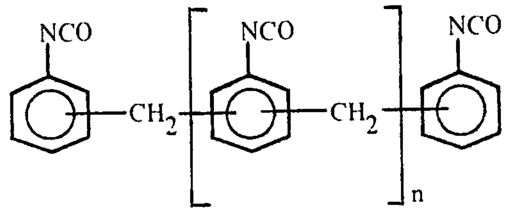

n étant 0,3—0,8
en tant que composant polyisocyanate (B).

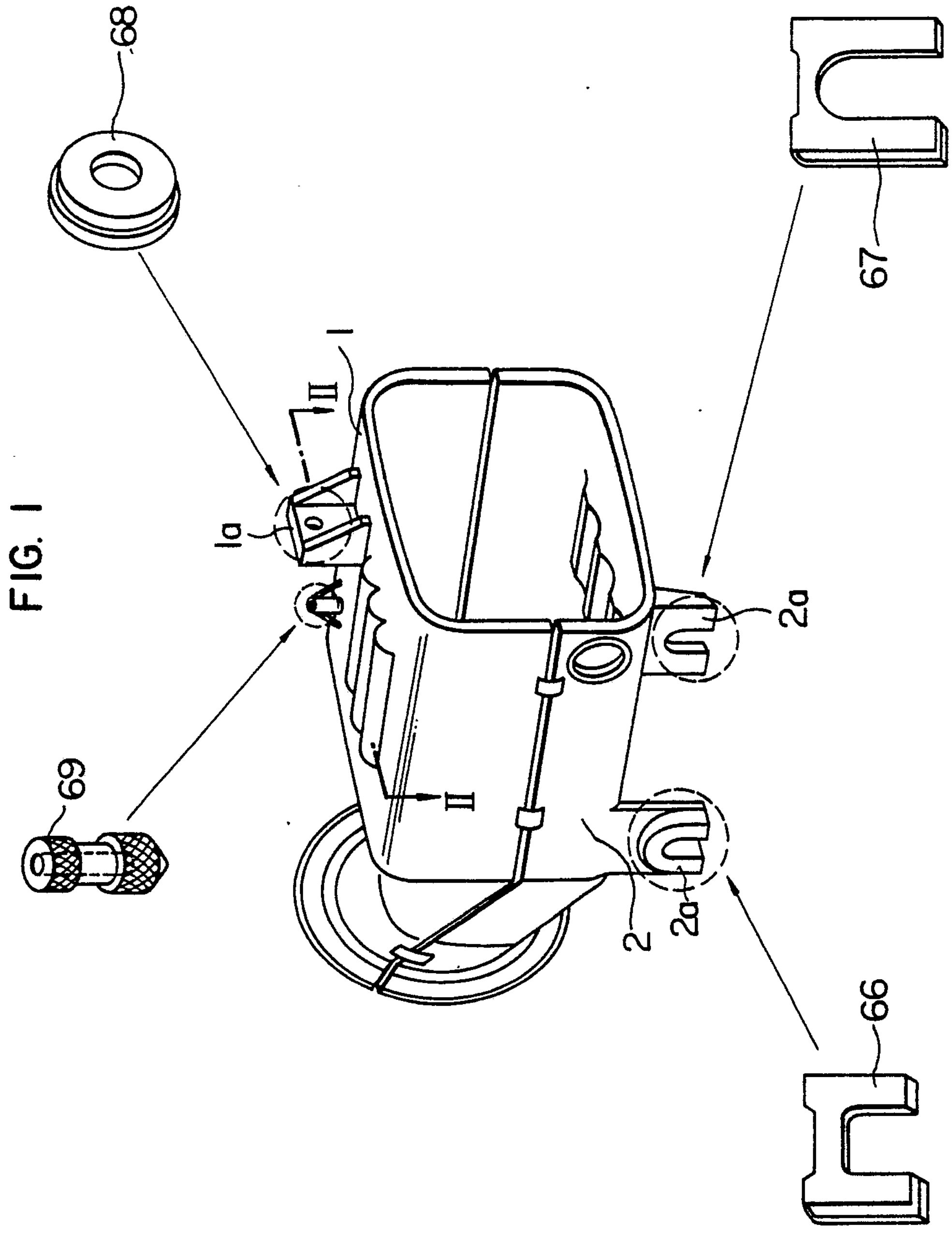


FIG. I

FIG. 2

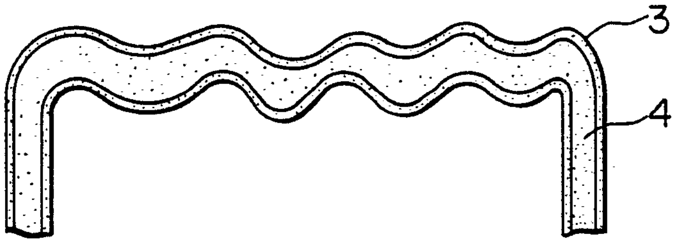


FIG. 3

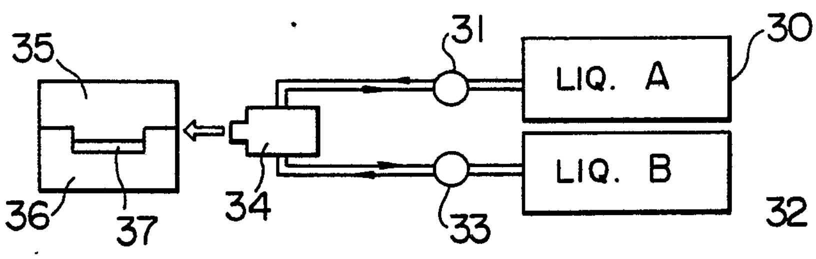

FIG. 4

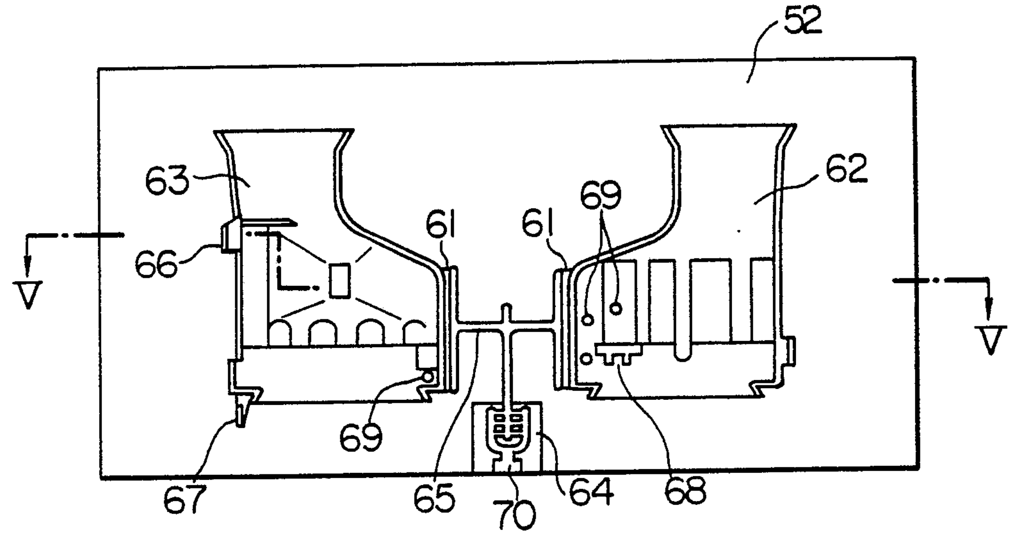
52
63
62
69
61
61
66
V
V
69
67
65
70
64
68

FIG. 5

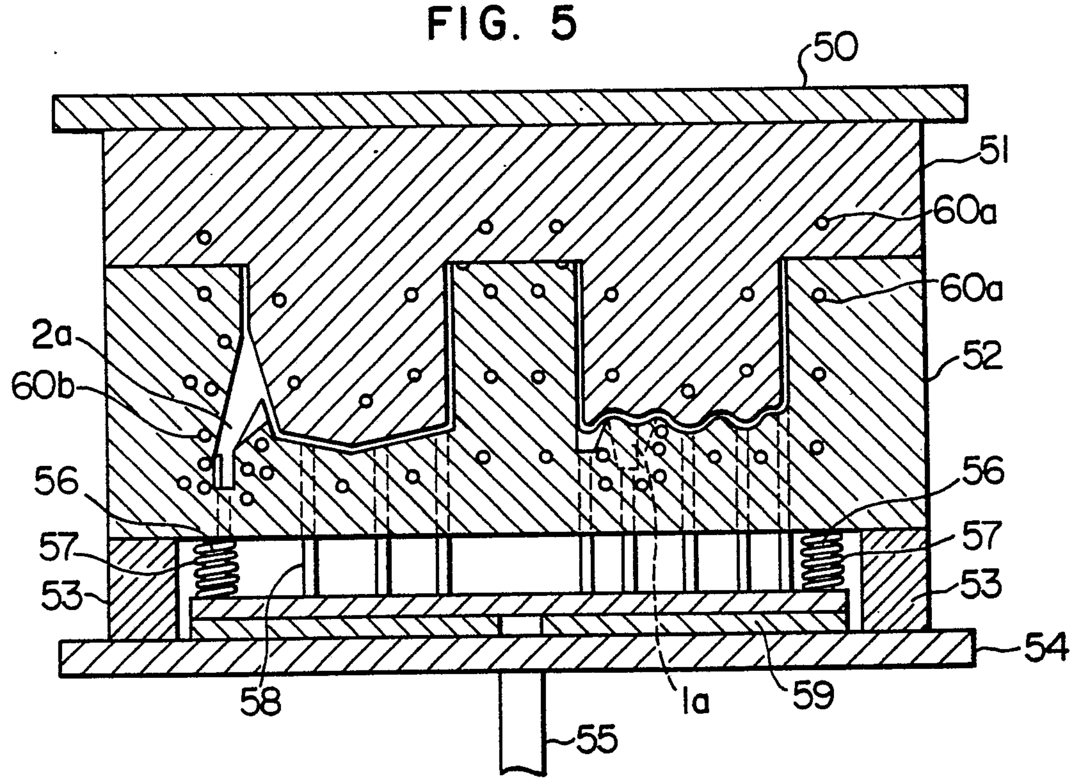
50
51
60a
60a
2a
60b
52
56
56
57
57
53
53
54
58
la
59
55

FIG. 6

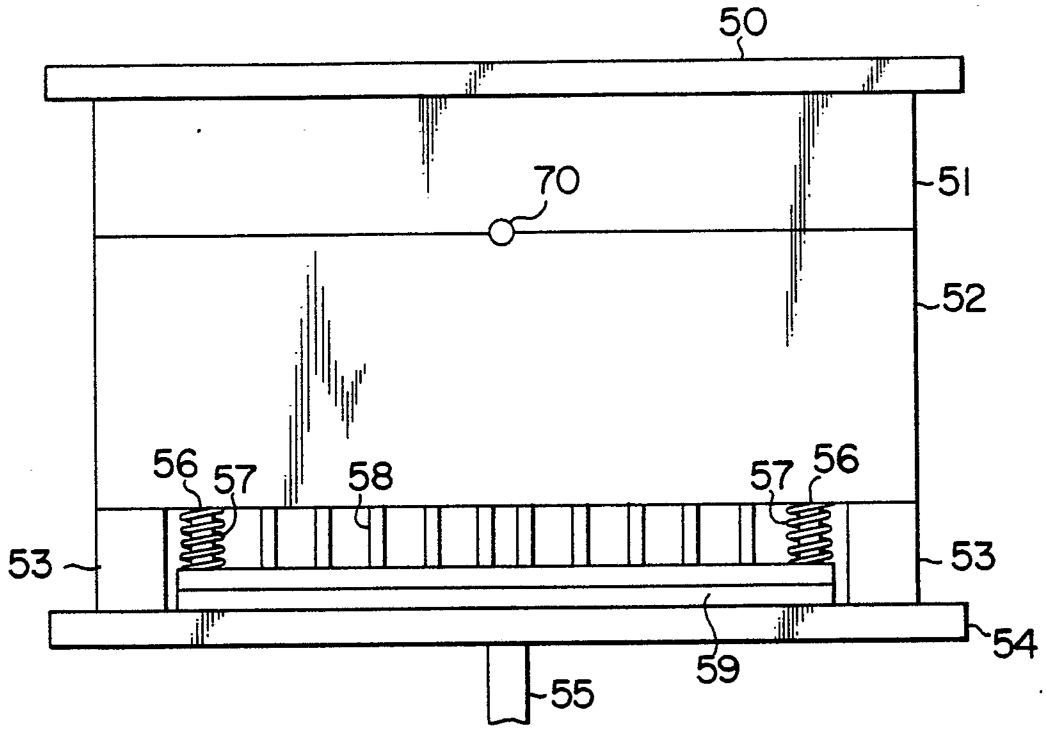

FIG. 7

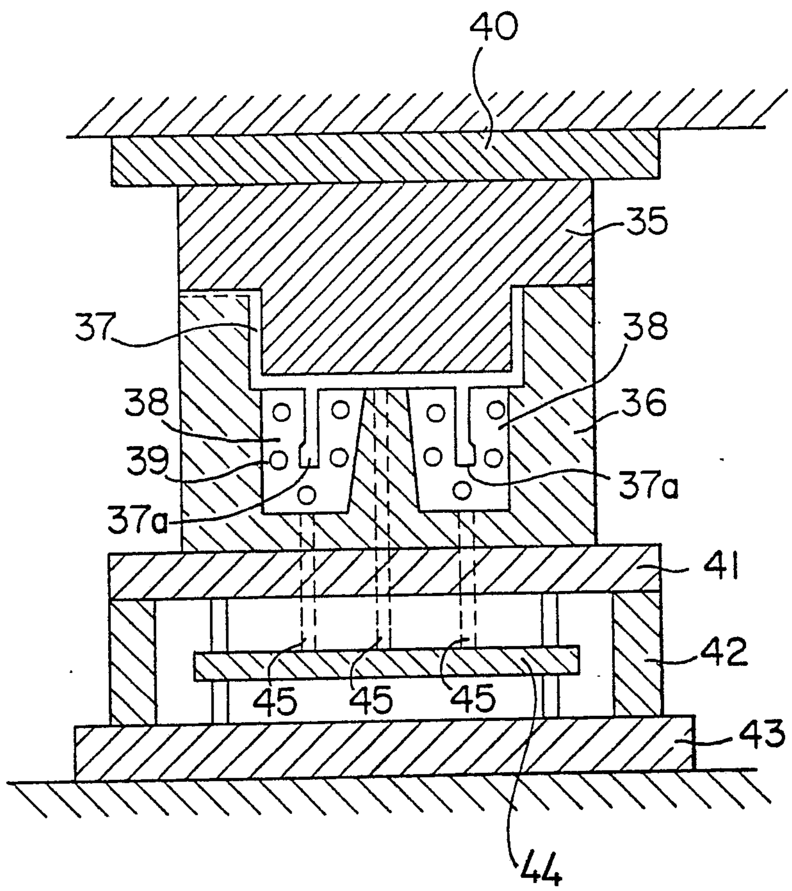


FIG. 8a

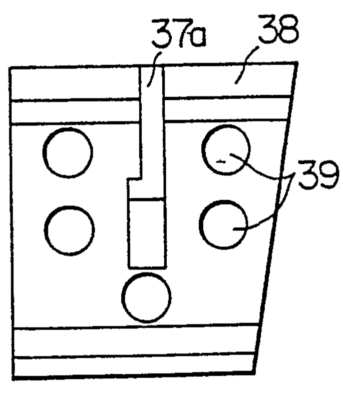


FIG. 8b

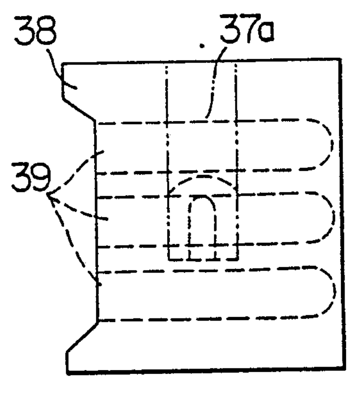

FIG. 9

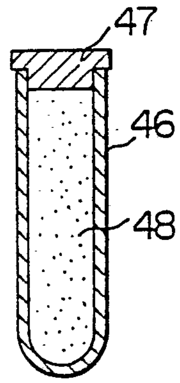


FIG. 10

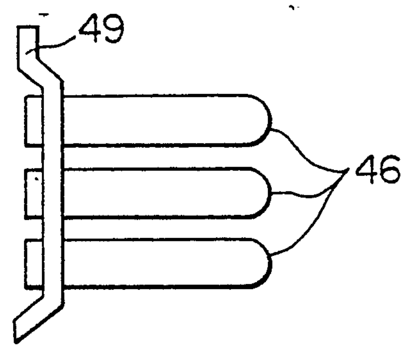


FIG. 11

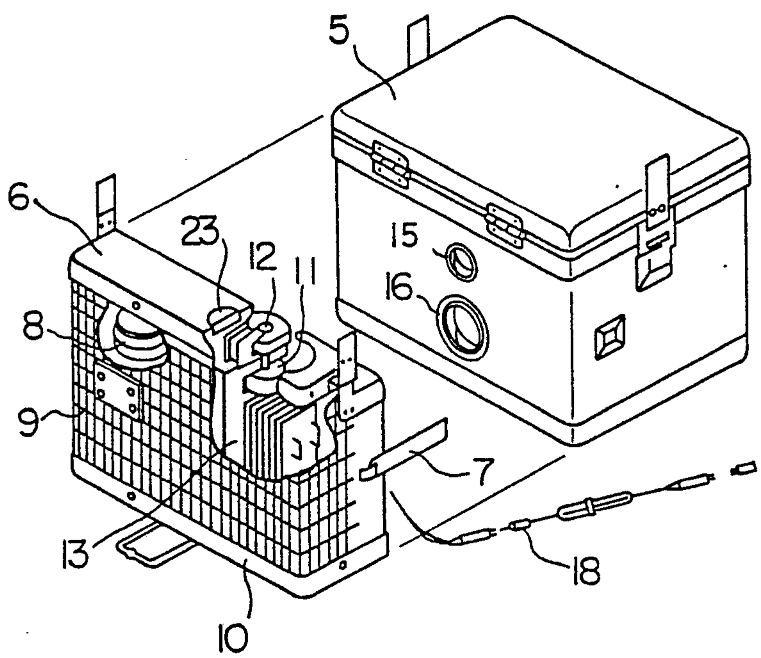

FIG. 12

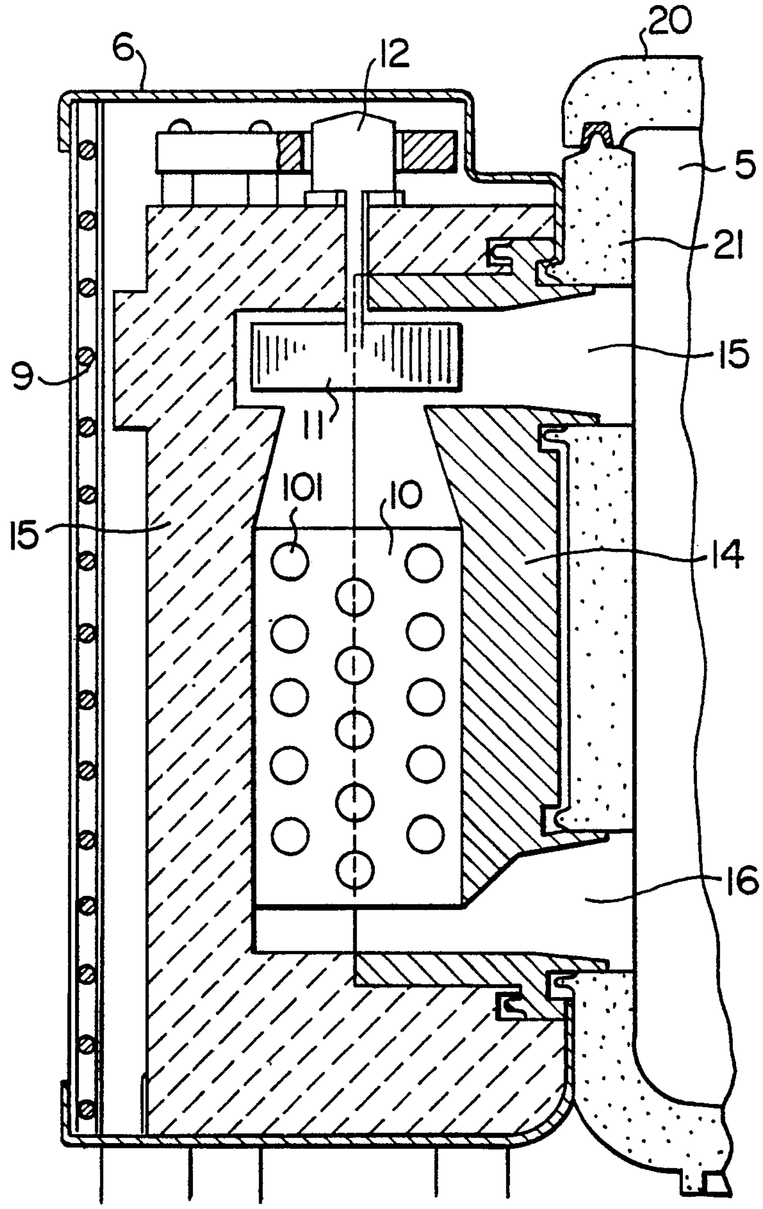

FIG. 13